# NEUE EUROPÄISCHE PATENTSCHRIFT

(11) **EP 1 511 947 B2**
(45) Veröffentlichungstag und Bekanntmachung des Hinweises auf die Entscheidung über den Einspruch: **15.03.2017**
(45) Hinweis auf die Patenterteilung: 03.03.2010
(21) Anmeldenummer: 03755924.2
(22) Anmeldetag: 26.03.2003
(51) Int. Cl.: F16D 25/10, F16D 25/0638

(54) **GANGSCHALTGETRIEBE FÜR EIN KRAFTFAHRZEUG MIT HYDRAULISCH BETÄTIGBARER MEHRFACHKUPPLUNG**
GEARSHIFT TRANSMISSION FOR A MOTOR VEHICLE HAVING A HYDRAULICALLY ACTUATABLE MULTI-DISC CLUTCH
BOITE DE VITESSES POUR AUTOMOBILE A EMBRAYAGE A DISQUES MULTIPLES A COMMANDE HYDRAULIQUE

(30) Priorität: 29.05.2002 DE 10223780
(43) Veröffentlichungstag der Anmeldung: 09.03.2005
(73) Patentinhaber: Dr. Ing. h.c. F. Porsche Aktiengesellschaft, 70435 Stuttgart (DE); ZF Sachs AG, 97424 Schweinfurt (DE)
(72) Erfinder: KRAXNER, Dieter, 75449 Wurmberg (DE); TIEDE, Klaus, 74343 Sachsenheim (DE); GROSSPIETSCH, Wolfgang, 97422 Schweinfurt (DE); KRAUS, Paul, 97464 Niederwerrn (DE)
(74) Vertreter: Patentanwälte ter Smitten Eberlein Rütten Partnerschaftsgesellschaft
(86) Internationale Anmeldenummer: PCT/EP2003/003108
(87) Internationale Veröffentlichungsnummer: WO 2003/102438

(56) Entgegenhaltungen:
- EP-A- 0 078 116
- EP-A1- 0 185 176
- EP-A1- 1 226 992
- EP-A1- 1 412 650
- EP-A2- 1 174 631
- EP-B1- 1 043 512
- DE-A- 10 004 190
- DE-A- 10 203 618
- DE-A1- 10 044 493
- DE-A1- 10 114 281
- DE-C2- 3 615 367
- US-A- 2 375 440
- US-A- 3 182 775
- US-A- 4 463 621
- US-A- 6 116 398

## Beschreibung

Die Erfindung geht aus von einem Gangschaltgetriebe für ein Kraftfahrzeug mit Mehrfachkupplung gemäß den Merkmalen des Oberbegriffs des Anspruchs 1.

Aus der DE 100 04 190 A1 ist eine Mehrfach - Kupplungseinrichtung bekannt, bei der die Kupplung bzw. der beide Kupplungseinheiten aufnehmende Kupplungskorb an den beiden Getriebeeingangswellen axial und radial gelagert ist. Hierdurch wird erreicht, dass die Toleranzen, die das Getriebegehäuse im Bereich der Gehäuseglocke und die Kupplungseinrichtung erfüllen müssen, weniger streng sind. Hier besteht jedoch die Gefahr, dass bei einer derartigen Abstützung der Kupplung ein Taumeln des am Kurbelwellenende befestigten Schwungrades sich auf die Kupplung überträgt. Auch aus der US 4,463,621 ist ein gattungsgemäßes Gangschaltgetriebe bekannt, das darüber hinaus an einem Gehäusedeckel einen Lagerflansch aufweist. Auch dieses Gangschaltgetriebe besitzt den beschriebenen Nachteil.

Aufgabe ist es daher, die Abstützung bzw. Lagerung der Kupplung derart zu verbessern, dass ein Schwungradtaumeln verhindert oder abgeschwächt bzw. das eine Stützwirkung für das Kurbelwellenende erreichbar ist.

Die Lösung der Aufgabe erfolgt durch die im Anspruch 1 angegebenen Merkmale.

Es ist erfindungsgemäß vorgesehen, dass der die Kupplungseinheiten umschließende Kupplungskorb an einem Gehäusedeckel des die Kupplung aufnehmenden Gehäuses abgestützt ist. Dazu weist der Gehäusedeckel um eine zentrale Öffnung, durch die eine Antriebsnabe des Kupplungskorbes hindurchgeführt ist, einen Lagerflansch auf, an dessen Außenseite der Kupplungskorb gelagert bzw. abgestützt ist, wobei der Kupplungskorb durch einen die Antriebsnabe aufnehmenden Kupplungsdeckel verschlossen ist, der am Kupplungskorb verschraubt ist.

In den Unteransprüchen sind weitere vorteilhafte Ausgestaltungen und Verbesserungen des erfindungsgemäßen Gangschaltgetriebes enthalten.

Der Kupplungskorb weist einen die Antriebsnabe aufnehmenden Kupplungsdeckel auf, der einerseits am Kupplungskorb verschraubt und andererseits in seinem Nabenbereich einen Lagerkragen aufweist, der über ein Radiallager am Lagerflansch des Gehäusedekkels abgestützt ist.

Darüber hinaus weist der Kupplungskorb in seiner axialen Verlängerung ein Drehbauteil für die Ölversorgung der Kupplungseinheiten auf, das koaxial zur äußeren Getriebewelle angeordnet und über ein Festlager in der Kupplungsglocke bzw. im Getriebegehäuse radial abgestützt und axial festgelegt ist.

Für die Ölzuführung sind auf vorteilhafte Art und Weise am Außenumfang des Drehbauteils drei Ringnuten vorgesehen, über die einerseits die Ölversorgung von Druckkammern für die Betätigung der beiden Kupplungseinheiten und andererseits eine Kühlölversorgung für die Kupplungslamellen sowie eine Ölversorgung von den Druckkammern gegenüber liegenden Druckausgleichskammern erfolgt. Dadurch, dass die Ölzufuhr über das Drehbauteil ausschließlich radial erfolgt, werden an das Drehbauteil angrenzende Wellendichtringe nicht oder nur geringfügig durch den Öldruck beaufschlagt.

Die äußere und als Hohlwelle ausgebildete Getriebewelle ist über ein Radiallager im Drehbauteil abgestützt, während sich die als Vollwelle ausgebildete innere Getriebewelle an der äußeren Getriebewelle ebenfalls über ein Radiallager abstützt, das in einer in der Vollwelle ausgebildeten Ringnut Aufnahme findet.

Der an der Kupplungsglocke bzw. am Getriebegehäuse verschraubte Gehäusedeckel bildet eine gute Lagerbasis für die Mehrfachkupplung durch eine einfache Zentrierung der Lagersitze für das am Drehbauteil vorgesehene Festlager und das am Lagerflansch des Gehäusedeckels vorgesehene Radiallager zueinander.

Ein Ausführungsbeispiel der Erfindung ist in der nachfolgenden Beschreibung und Zeichnung näher erläutert.

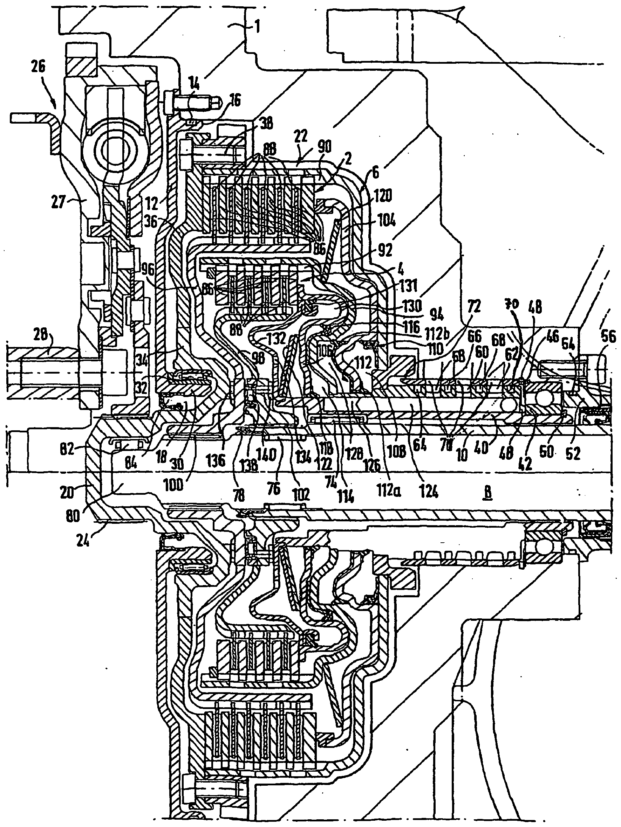

Diese zeigt in der einzigen Figur einen Längsschnitt durch ein Gangschaltgetriebe im Kupplungsbereich.

### Beschreibung des Ausführungsbeispiels

In einem Gehäuse, im folgenden als Gehäuseglocke 1 bezeichnet, ist eine aus zwei Kupplungseinheiten 2 und 4 bestehende Doppelkupplung 6 angeordnet. Die Gehäuseglocke 1 kann dabei als separates Bauteil in einem Antriebsstrang einer Brennkraftmaschine zwischen Motor und Getriebe angeordnet oder alternativ dazu, einstückig aus dem Getriebegehäuse herausgebildet sein. In der Doppelkupplung 6 sind zwei Getriebeeingangswellen 8 und 10 aufgenommen, die auf bekannte Art und Weise mit den beiden Kupplungseinheiten 2 und 4 zum wechselseitigen Schalten einer ersten und zweiten Gruppe von Getriebegängen zusammenwirken. Die Doppelkupplung 6 ist öldicht durch einen separaten Gehäusedeckel 12 verschlossen, der an der Gehäuseglokke 1 verschraubt und abgedichtet ist. Dazu weist der Gehäusedeckel 12 an seinem radialen äußeren Ende einen Kragen 16 auf, in der eine Nut 14 zur Aufnahme eines Dichtungsringes vorgesehen ist. Im Gehäusedeckel 12 ist eine zentrale Öffnung 18 vorgesehen, durch die eine Antriebsnabe 20 eines Kupplungskorbes 22 der Doppelkupplung 6 hindurchgeführt ist. Die Antriebsnabe 20 weist eine Außenverzahnung 24 auf, die in die Innenverzahnung eines Torsionsschwingungsdämpfer 26 eingreift. Der in einem Zweimassenschwungrad integrierte Torsionsschwingungsdämpfer, dessen Aufbau bekannt ist und hier nicht näher beschrieben wird, ist mit seiner Primärseite 27 am Kurbelwellenende 28 der nicht näher dargestellten Motoreinheit verschraubt.

Die zentrale Öffnung 18 wird durch einen aus dem Gehäusedeckel 12 herausgebildeten und nach innen gerichteten Lagerflansch 30 begrenzt, an dessen Außenseite der Kupplungskorb 22 motorseitig über ein Radiallager 32 abgestützt ist, wobei letzteres im vorliegenden Ausführungsbeispiel als Wälzlager ausgebildet ist; alternativ dazu ist auch eine Gleitlager-Ausführung möglich. Dazu weist der Kupplungskorb 22 einen mit einem Lagerkragen 34 versehenen Kupplungsdeckel 36 auf, der über Schrauben 38 am Kupplungskorb 22 befestigt ist.

Der Kupplungskorb 22 ist getriebeseitig durch ein Drehbauteil 40 verlängert, das die äußere Getriebeeingangswelle koaxial und drehbeweglich dazu umschließt. Das Drehbauteil 40 bzw. der Kupplungskorb 22 ist an seinem getriebeseitigen Ende über ein Kugellager 42 in der Gehäuseglocke 1 abgestützt, wobei das Kugellager 42 in einem zylinderförmig ausgebildeten Halsabschnitt 44 der Gehäuseglocke 1 aufgenommen und in beide axiale Richtungen eingespannt bzw. festgelegt ist. Dazu ist das Kugellager 42 auf der dem Getriebe zugewandten Seite in einer Stufenbohrung des Halsabschnittes 44 aufgenommen und wird auf der andere Seite über eine Anlaufscheibe 46 axial gesichert. Die Anlaufscheibe 46 wird wiederum durch einen in einer Innennut des zylinderförmigen Halsabschnittes 44 angeordneten Sprengring 48 gesichert. Gleichzeitig ist das Drehbauteil 40 gegenüber dem Kugellager 42 gegen axiale Verschiebung gesichert; dazu ist auf dem Drehbauteil 40 links und rechts des Kugellagers 42 ein linksbündiger und ein rechtsbündiger Anschlag 48 und 50 vorgesehen. Der rechtsbündige Anschlag 50 wird wiederum durch einen Sprengring gebildet, der in einer auf dem Außenumfang des Drehbauteils 40 angeordneten umlaufenden Nut eingesetzt ist.

Getriebeseitig wird die Gehäuseglocke 1 an der Stirnseite des zylinderförmigen Halsabschnittes 44 durch einen zweiten Gehäusedeckel 52 abgeschlossen, der am Halsabschnitt 44 verschraubt und über einen 0 - Ring 54 gegenüber der Gehäuseglocke 1 abgedichtet ist. Die beiden durch den Gehäusedeckel 52 hindurchgeführten Getriebewellen 8 und 10 sind über einen Wellendichtring 56 abgedichtet.

Das Drehbauteil 40 weist an seinem Außenumfang drei Ringnuten 58, 60 und 62 auf, über die, wie noch später näher erläutert, die Ölzufuhr zu den Kupplungseinheiten 2 und 4 erfolgt. Die drei Ringnuten sind durch Kolbenringe gegeneinander abgedichtet, die in entsprechend dafür vorgesehene Ringnuten 64, 66, 68 und 70 eingelegt sind. Im Bereich der Ölzufuhr ist zwischen dem Drehbauteil 40 und der Öffnung des zylinderförmigen Halsabschnittes 44 eine mit Öl - Zufuhröffnungen 71 versehene Buchse 72 eingesetzt.

Die äußere Getriebeeingangswelle 10 ist gegenüber dem Drehbauteil 40 des Kupplungskorbes 22 durch ein als Nadellager 74 ausgebildetes Radiallager abgestützt. Die als Vollwelle ausgebildete innere Getriebeeingangswelle 8 ist über ein Radiallager 76 gegenüber der als Hohlwelle ausgebildeten äußeren Getriebeeingangswelle 10 abgestützt. Das Radiallager 76 ist dabei in einer in der Vollwelle 8 ausgebildeten Ringnut eingesetzt; dadurch ist der am stirnseitigen Ende der Hohlwelle 10 angeordnete Wellendichtring 78 in seinem Außenumfang kleiner dimensionierbar. Der Wellendichtring 78 dient der Abdichtung des zwischen der Hohlwelle 10 und der Vollwelle 8 geführten Getriebeöls, das u. a. zur Schmierung des Radiallagers 76 erforderlich ist. Alternativ oder zusätzlich zur Abstützung der Getriebeeingangswellen 8, 10 im Kupplungskorb 22 durch das Radiallager 74 kann das zapfenförmige Ende 80 der Vollwelle 8 gegenüber der Antriebsnabe 20 durch ein als Nadellager ausgebildetes Radiallager 82 abgestützt sein. Zur Abdichtung der Antriebsnabe 20 gegenüber dem Gehäusedeckel 12 ist zwischen der Innenseite des Lagerflansches 30 und der Außenseite der Antriebsnabe 20 ein Wellendichtring 84 vorgesehen.

Der Aufbau und die Wirkungsweise der beiden im Kupplungskorb 22 angeordneten Kupplungseinheiten 2 und 4 ist beispielsweise aus der DE 100 04 190 A1 bekannt und wird daher im folgendenden nur soweit erforderlich, in ihrem Aufbau näher beschrieben. Beide Kupplungseinheiten 2 und 4 weisen mehrere als Lamellen ausgebildete Kupplungsscheiben auf, die hintereinander im Wechsel als treibende außenverzahnte Reiblamellen 86 und als getriebene innenverzahnte Lamellen 88 angeordnet sind. Die außenverzahnten Reiblamellen, im folgenden als Außenlamellen 86 bezeichnet, der Kupplungseinheit 2 greifen in Nuten 90 des Kupplungskorbes 22 ein; analog dazu greifen die außenverzahnten Reiblamellen 86 der Kupplungseinheit 4 in Nuten 92 eines einstückig mit dem Drehbauteil 40 des Kupplungskorbes 22 verbundenen Außenlamellenträgers 94 ein. Die getriebenen innenverzahnten Lamellen, im folgenden als Innenlamellen 88 bezeichnet, sind jeweils einem Innenlamellenträger 96 bzw. 98 zugeordnet. Der Innenlamellenträger 96 der Kupplungseinheit 2 ist über eine Verzahnung 100 drehfest mit der Vollwelle 8 verbunden, während der Innenlamellenträger 98 der Kupplungseinheit 4 über eine Verzahnung 102 drehfest mit der Hohlwelle 10 verbunden ist.

An den beiden außenverzahnten Endlamellen 86 der beiden Kupplungseinheiten 2 und 4 sind Betätigungskolben 104 und 106 angeordnet, die über eine entsprechende Druckölbeaufschlagung die Außenlamellen 86 gegen die Innenlamellen 88 pressen. Zur Druckbeaufschlagung für die Kupplungseinheit 2 ist eine Druckkammer 108 ausgebildet, die über entsprechende Dichtungselemente 110 und 112 abgedichtet ist. Analog dazu ist für den Betätigungskolben 106 eine Druckkammer 114 vorgesehen, die ebenfalls über Dichtungselemente 116 und 118 abgedichtet ist. Im nicht eingerückten Zustand der beiden Kupplungseinheiten 2 und 4 werden die Betätigungskolben 104 und 106 über entsprechende Membranfedern 120, 122 gegen den Kupplungskorb 22 bzw. gegen den Lamellenträger 94 gedrückt.

Über die Ringnut 58 und eine im Drehbauteil 40 vorgesehene Axialbohrung 124 wird die Druckkammer 108 mit Öl versorgt, während über die Ringnut 62 und eine Axialbohrung 126 die Druckkammer 114 mit Öl versorgt wird. Den beiden Druckkammern 108 und 114 liegen jeweils eine Druckausgleichskammer 128 und 130 gegenüber, die über die Ringnut 60 und über eine dritte im Drehbauteil 40 angeordnete Axialbohrung (nicht dargestellt) mit Öl versorgt werden. Bei höheren Drehzahlen kann fliehkraftbedingt die Einrückbewegung der beiden Betätigungskolben 104 und 106 beeinträchtigt werden; durch die Druckausgleichskammern 128 und 130 wird eine entsprechende Kompensation der auf den Kolben ausgeübten fliehkraftbedingten Druckkräfte erreicht. Die Druckausgleichskammern 128, 130 sind wiederrum durch Dichtungselemente 112 und 131 abgedichtet, wobei das Dichtungselement 112 zwei Dichtlippen 112a und 112b aufweist; Dichtlippe 112a dichtet die Druckkammer 108 ab, während Dichtlippe 112b die Druckausgleichskammer 128 abdichtet. Die Druckausgleichskammer 130 ist durch ein Wandungsteil 132 begrenzt, in dem eine Öffnung 134 angeordnet ist. Über die Öffnung 134 kann das in der Druckausgleichskammer 130 befindliche Öl zur Kühlung der Lamellen 86, 88 in den Kupplungsraum übertreten.

Zwischen dem Kupplungsdeckel 36 und dem Innenlamellenträger 96 ist zur axialen Abstützung beider Bauteile ein Gleitlager 136 vorgesehen; analog dazu ist zwischen dem Innenlamellenträger 96 der Kupplungseinheit 2 und dem Innenlamellenträger 98 der Kupplungseinheit 4 ein Nadellager 138 sowie zwischen dem Innenlamellenträger 98 und dem Wandungsteil 132 ein Gleitlager 140 vorgesehen.

## Patentansprüche

1. Gangschaltgetriebe für ein Kraftfahrzeug mit hydraulisch betätigbarer Mehrfachkupplung, insbesondere Doppelkupplung, mit einer ersten Getriebeeingangswelle (8) zum Antrieb einer ersten Gruppe von Getriebegängen und einer zweiten Getriebeeingangswelle (10) zum Antrieb einer zweiten Gruppe von Getriebegängen, wobei beiden Getriebeeingangswellen (8, 10) jeweils eine Kupplungseinheit (2, 4) zugeordnet ist und dass beide Getriebeeingangswellen (8, 10) und beide Kupplungseinheiten (2, 4) koaxial zueinander angeordnet sind, sowie mit einem die beiden Kupplungseinheiten (2, 4) aufnehmenden stationären Gehäuse (1), welches stirnseitig durch einen Gehäusedeckel (12) verschließbar ist und der eine zentrale Öffnung (18) aufweist, durch die eine Antriebsnabe eines Kupplungskorbes (22) hindurchgeführt ist, **dadurch gekennzeichnet, dass** der Gehäusedeckel (12) um die zentrale Öffnung (18) einen Lagerflansch (30) aufweist, an dessen Außenseite der Kupplungskorb (22) gelagert bzw. abgestützt ist, wobei der Kupplungskorb (22) durch einen die Antriebsnabe (20) aufnehmenden Kupplungsdeckel (36) verschlossen ist, der am Kupplungskorb (22) verschraubt ist.

2. Gangschaltgetriebe nach Anspruch 1, **dadurch gekennzeichnet, dass** der Kupplungsdeckel (36) einen Lagerkragen (34) aufweist, der über ein erstes Radiallager (32) am Lagerflansch (30) des Gehäusedeckels (12) abgestützt ist.

3. Gangschaltgetriebe nach einem der vorhergehenden Ansprüche, **dadurch gekennzeichnet, dass** der Kupplungskorb (22) in seiner axialen Verlängerung ein Drehbauteil (40) für die Ölzuführung aufweist, das koaxial zur äußeren Getriebewelle (10) angeordnet und über ein Festlager (42) im Gehäuse (1) radial abgestützt und axial gesichert ist.

4. Gangschaltgetriebe nach Anspruch 3, **dadurch gekennzeichnet, dass** das Festlager ein Kugellager (42) aufweist, das im Gehäuse (1) axial eingespannt ist.

5. Gangschaltgetriebe nach Anspruch 3 oder 4, **dadurch gekennzeichnet, dass** am Außenumfang des Drehbauteils (40) drei umlaufende Ringnuten (58, 60, 62) vorgesehen sind, die der Ölzufuhr zum Betätigen der beiden Kupplungseinheiten (2, 4) sowie zur Kühlölversorgung der mit Lamellen (86, 88) versehenen Kupplungseinheiten (2, 4) dienen.

6. Gangschaltgetriebe nach einem der vorhergehenden Ansprüche, **dadurch gekennzeichnet, dass** die innere Getriebewelle (8) eine Ringnut aufweist, in der ein zweites Radiallager (76) zur Abstützung gegenüber der äußeren Getriebewelle (10) Aufnahme findet.

7. Gangschaltgetriebe nach einem der Ansprüche 3 bis 6, **dadurch gekennzeichnet, dass** die äußere Getriebewelle (10) über ein drittes Radiallager (74) im Drehbauteil (40) abgestützt ist.

8. Gangschaltgetriebe nach Anspruch 1, **dadurch gekennzeichnet, dass** zwischen der Innenseite des Lagerflansches (30) und der Außenseite der Antriebsnabe (20) des Kupplungskorbes (22) ein Wellendichtring (84) vorgesehen ist.

9. Gangschaltgetriebe nach Anspruch 1, **dadurch gekennzeichnet, dass** der Gehäusedeckel (12) am Gehäuse (1) verschraubt und über eine 0 - Ringdichtung (14) nach außen abgedichtet ist.

## Claims

1. Gearshift transmission for a motor vehicle having a hydraulically actuable multi-disc clutch, in particular dual clutch, having a first transmission input shaft (8) for driving a first group of transmission gears and having a second transmission input shaft (10) for driving a second group of transmission gears, with the two transmission input shafts (8, 10) being assigned in each case one clutch unit (2, 4) and with the two transmission input shafts (8, 10) and the two clutch units (2, 4) being arranged coaxially with respect to one another, and having a stationary housing (1) which holds the two clutch units (2, 4) and which can be closed off at the end side by a housing cover (12) and which has a central opening (18) through which a drive hub of a clutch cage (22) extends, **characterized in that** the housing cover (12) has, around the central opening (18), a bearing flange (30) on the outside of which the clutch cage (22) is mounted or supported, clutch cage (22) is closed off by a clutch cover (36) which holds the drive hub (20) and which is screwed to the clutch cage (22).

2. Gearshift transmission according to Claim 1, **characterized in that** the clutch cover (36) has a bearing collar (34) which is supported via a first radial bearing (32) on the bearing flange (30) of the housing cover (12).

3. Gearshift transmission according to one of the preceding claims, **characterized in that** the clutch cage (22) has, in the axial elongation thereof, a rotary component (40) for the supply of oil, which rotary component (40) is arranged coaxially with respect to the outer transmission shaft and is radially supported and axially secured by means of a fixed bearing (42) in the housing (1).

4. Gearshift transmission according to Claim 3, **characterized in that** the fixed bearing has a ball bearing (42) which is clamped axially in the housing (1).

5. Gearshift transmission according to Claim 3 or 4, **characterized in that** three encircling annular grooves (58, 60, 62) are provided on the outer circumference of the rotary component (40), which annular grooves (58, 60, 62) serve to supply oil for the actuation of the two clutch units (2, 4) and to supply cooling oil to the clutch units (2, 4) which are provided with discs (86, 88).

6. Gearshift transmission according to one of the preceding claims, **characterized in that** the inner transmission shaft (8) has an annular groove in which is held a second radial bearing (76) for support with respect to the outer transmission shaft (10).

7. Gearshift transmission according to one of Claims 3 to 6, **characterized in that** the outer transmission shaft (10) is supported in the rotary component (40) by means of a third radial bearing (74).

8. Gearshift transmission according to Claim 1, **characterized in that** a shaft sealing ring (84) is provided between the inner side of the bearing flange (30) and the outer side of the drive hub (20) of the clutch cage (22).

9. Gearshift transmission according to Claim 1, **characterized in that** the housing cover (12) is screwed to the housing (1) and is sealed off to the outside by means of an O-ring seal (14).

## Revendications

1. Transmission à changement de vitesses pour un véhicule automobile comprenant un embrayage multiple à commande hydraulique, notamment un double embrayage, avec un premier arbre d'entrée de transmission (8) pour l'entraînement d'un premier groupe de rapports de transmission et un deuxième arbre d'entrée de transmission (10) pour l'entraînement d'un deuxième groupe de rapports de transmission, les deux arbres d'entrée de transmission (8, 10) étant associés à une unité d'embrayage respective (2, 4) et les deux arbres d'entrée de transmission (8, 10) et les deux unités d'embrayage (2, 4) étant disposés coaxialement les uns par rapport aux autres, et comprenant aussi un carter (1) stationnaire recevant les deux unités d'embrayage (2, 4), lequel peut être fermé du côté frontal par un couvercle de carter (12), et qui présente une ouverture centrale (18), à travers laquelle est guidé un moyeu d'entraînement d'une cloche d'embrayage (22), **caractérisée en ce que** le couvercle de carter (12) présente, autour de l'ouverture centrale (18), une bride de palier (30) sur le côté extérieur de laquelle est montée ou supportée la cloche d'embrayage (22), la cloche d'embrayage (22) étant fermée par un couvercle d'embrayage (36) recevant le moyeu d'entraînement (20), qui est vissé sur la cloche d'embrayage (22).

2. Transmission à changement de vitesses selon la revendication 1, **caractérisée en ce que** le couvercle d'embrayage (36) présente un rebord de palier (34) qui est supporté par le biais d'un premier palier radial (32) sur la bride de palier (30) du couvercle de carter (12).

3. Transmission à changement de vitesses selon l'une quelconque des revendications précédentes, **caractérisée en ce que** la cloche d'embrayage (22) présente, dans son prolongement axial, un composant rotatif (40) pour l'alimentation en huile, qui est disposé coaxialement à l'arbre de transmission extérieur (10) et qui est supporté radialement et fixé axialement par le biais d'un palier fixe (42) dans le carter (1).

4. Transmission à changement de vitesses selon la revendication 3, **caractérisée en ce que** le palier fixe présente un roulement à billes (42) qui est serré axialement dans le carter (1).

5. Transmission à changement de vitesses selon la revendication 3 ou 4, **caractérisée en ce que** l'on prévoit sur la périphérie extérieure du composant rotatif (40) trois rainures annulaires périphériques (58, 60, 62) qui servent à l'alimentation en huile pour les actionnements des deux unités d'embrayage (2, 4) ainsi que pour l'alimentation en huile de refroidissement des unités d'embrayage (2, 4) pourvues de disques (86, 88).

6. Transmission à changement de vitesses selon l'une quelconque des revendications précédentes, **caractérisée en ce que** l'arbre de transmission intérieur (8) présente une rainure annulaire dans laquelle est reçu un deuxième palier radial (76) pour assurer le support par rapport à l'arbre de transmission extérieur (10).

7. Transmission à changement de vitesses selon l'une quelconque des revendications 3 à 6, **caractérisée en ce que** l'arbre de transmission extérieur (10) est supporté par le biais d'un troisième palier radial (74) dans le composant rotatif (40).

8. Transmission à changement de vitesses selon la revendication 1, **caractérisée en ce que** l'on prévoit entre le côté intérieur de la bride de palier (30) et le côté extérieur du moyeu d'entraînement (20) de la cloche d'embrayage (22) une bague d'étanchéité d'arbre (84).

9. Transmission à changement de vitesses selon la revendication 1, **caractérisée en ce que** le couvercle du carter (12) est vissé sur le carter (1) et est rendu étanche vis-à-vis de l'extérieur par le biais d'un joint torique (14).
